# EUROPÄISCHE PATENTSCHRIFT

(11) **EP 3 839 666 B1**
(45) Veröffentlichungstag und Bekanntmachung des Hinweises auf die Patenterteilung: **11.10.2023**
(21) Anmeldenummer: 19217606.3
(22) Anmeldetag: 18.12.2019
(51) Int. Cl.: G05B 13/02

(54) **STEUEREINRICHTUNG ZUM STEUERN EINES TECHNISCHEN SYSTEMS UND VERFAHREN ZUM KONFIGURIEREN DER STEUEREINRICHTUNG**
CONTROL SYSTEM FOR CONTROLLING A TECHNICAL SYSTEM AND METHOD FOR CONFIGURING THE CONTROL DEVICE
DISPOSITIF DE COMMANDE DESTINÉ À LA COMMANDE D'UN SYSTÈME TECHNIQUE ET PROCÉDÉ DE CONFIGURATION DU DISPOSITIF DE COMMANDE

(43) Veröffentlichungstag der Anmeldung: 23.06.2021
(73) Patentinhaber: Siemens Aktiengesellschaft, 80333 München (DE)
(72) Erfinder: Hein, Daniel, 81549 München (DE); Schöner, Holger, 81739 München (DE); Weber, Marc Christian, 80339 München (DE)
(74) Vertreter: Siemens Patent Attorneys

(56) Entgegenhaltungen:
- EP-A1- 3 588 211
- DE-A1-102014 212 747
- DE-A1-102016 224 207
- DE-A1-102017 205 713
- DE-A1-102017 216 634
- SAURAV KAUSHIK: "Introduction to Feature Selection methods with an example (or how to select the right variables?)", INTERNET CITATION, 1. Dezember 2016 (2016-12-01), XP002787063, Gefunden im Internet: URL:https://www.analyticsvidhya.com/blog/2 016/12/introduction-to-feature-selection-m ethods-with-an-example-or-how-to-select-th e-right-variables/ [gefunden am 2018-12-04]

## Beschreibung

Komplexe technische Systeme wie z.B. Gasturbinen, Windturbinen, Verbrennungskraftmaschinen, Roboter, Fertigungsanlagen, Kraftfahrzeuge oder Stromnetze benötigen für einen produktiven Betrieb in der Regel eine aufwendige Konfiguration, um beispielsweise einen Ertrag, einen Ressourcenbedarf, einen Wirkungsgrad, einen Schadstoffausstoß, einen Verschleiß und/oder andere Zielparameter des technischen Systems gezielt zu optimieren.

Zeitgemäße Steuereinrichtungen von technischen Systemen verwenden zur Konfiguration häufig Verfahren des maschinellen Lernens. Mittels derartiger Lernverfahren kann eine Steuereinrichtung anhand von Trainingsdaten darauf trainiert werden, ausgehend von aktuellen Betriebsdaten des technischen Systems diejenigen Steueraktionen zum Steuern des technischen Systems zu ermitteln, die spezifisch ein gewünschtes oder anderweitig optimales Verhalten des technischen Systems bewirken. Zu diesen Zwecken steht eine Vielzahl bekannter Lernverfahren, wie z.B. Verfahren des bestärkenden Lernens zur Verfügung. Als Trainingsdaten können dabei insbesondere historische und/oder aktuelle Betriebsdaten des technischen Systems oder ähnlicher technischer Systeme verwendet werden.

Bei bekannten Lernverfahren wird für ein erfolgreiches Training in der Regel eine große Menge von Trainingsdaten benötigt, die zudem die Betriebsbedingungen des technischen Systems möglichst repräsentativ abdecken sollten. Eine zu geringe Menge an repräsentativen Trainingsdaten oder eine zu geringe Abdeckung von relevanten Betriebsbedingungen kann sich negativ auf einen Trainingserfolg auswirken. Die Publikation DE 10 2016 224207 A1 offenbart eine auf einem Lernverfahren basierte Steuereinrichtung, wobei die Trainingsdaten Betriebsdaten entsprechen.

Die Publikation SAURAV KAUSHIK: "Introduction to Feature Selection methods with an example (or how to select the right variables?), zeigt die Vorfilterung von Trainingsdaten, wobei Merkmale basierend auf Basis ihrer Korrelation mit der Ergebnisvariablen selektiert werden.

Es ist Aufgabe der vorliegenden Erfindung, eine Steuereinrichtung zum Steuern eines technischen Systems sowie ein Verfahren zum Konfigurieren der Steuereinrichtung anzugeben, die ein effizienteres Training erlauben.

Gelöst wird diese Aufgabe durch ein Verfahren mit den Merkmalen des Patentanspruchs 1, durch eine Steuereinrichtung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Zum Konfigurieren einer Steuereinrichtung für ein technisches System mittels eines maschinellen Lernverfahrens wird eine zeitliche Abfolge von Trainingsdaten für das maschinelle Lernverfahren erfasst. Die Trainingsdaten umfassen hierbei Zustände des technischen Systems spezifizierende Zustandsdaten sowie Steueraktionen des technischen Systems spezifizierende Steueraktionsdaten. Das technische System kann insbesondere eine Gasturbine, eine Windturbine, eine Solarkraftanlage, ein Kraftwerk, eine Verbrennungskraftmaschine, ein Roboter, eine Fertigungsanlage, ein Kraftfahrzeug, ein Verkehrsleitsystem, eine Energiesteuerung für ein Gebäude, ein Energieübertragungsnetz, ein 3d-Drucker oder eine andere Maschine umfassen. Erfindungsgemäß wird eine zeitliche Veränderung der Steueraktionsdaten spezifisch erfasst und mit zeitlichen Veränderungen der Zustandsdaten innerhalb unterschiedlicher Zeitfenster korreliert, wobei jeweils ein zeitfensterspezifischer Korrelationswert ermittelt wird. Abhängig von den ermittelten Korrelationswerten wird dann ein resultierendes Zeitfenster ermittelt, und die innerhalb des resultierenden Zeitfensters befindlichen Trainingsdaten werden zeitfensterspezifisch extrahiert. Die Steuereinrichtung wird dann mittels des maschinellen Lernverfahrens anhand der extrahierten Trainingsdaten trainiert und damit zum Steuern des technischen Systems konfiguriert.

Zum Ausführen des erfindungsgemäßen Verfahrens sind eine Steuereinrichtung, ein Computerprogrammprodukt sowie ein vorzugsweise nichtflüchtiges computerlesbares Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Insofern ein resultierendes Zeitfenster gezielt so ermittelt wird, dass zeitliche Veränderungen von darin enthaltene Zustandsdaten mit zeitlichen Veränderungen von Steueraktionsdaten korrelieren, ist zu erwarten, dass die im resultierenden Zeitfenster enthalten Trainingsdaten überdurchschnittlich viel Information über Auswirkungen von Steuereingriffen auf Zustände des technischen Systems beinhalten. Es erweist sich, dass durch eine spezifische Extraktion und Nutzung von innerhalb des resultierenden Zeitfensters befindlichen Trainingsdaten kausale Zusammenhänge zwischen Steuereingriffen und deren Auswirkungen oft erheblich schneller und effizienter gelernt werden können. In vielen Fällen kann entgegen einer verbreiteten Lehrmeinung beobachtet werden, dass ein auf spezifisch selektierte Trainingsdaten beschränktes Training effizienter ist als ein Training mit allen verfügbaren Trainingsdaten. Häufig können weniger relevante oder redundante Trainingsdaten einen Trainingserfolg sogar verschlechtern.

Vorteilhafte Ausführungsformen und Weiterbildungen der Erfindung sind in den abhängigen Ansprüchen angegeben.

Nach einer vorteilhaften Ausführungsform der Erfindung können die Korrelationswerte für unterschiedliche Zeitfenster verglichen werden. Abhängig davon kann ein hinsichtlich der Korrelationswerte optimiertes Zeitfenster als resultierendes Zeitfenster ermittelt werden. Insbesondere kann ein Zeitfenster mit einem eine höchste Korrelation oder höchste Antikorrelation angebenden Korrelationswert als resultierendes Zeitfenster selektiert werden. Alternativ oder zusätzlich kann das resultierende Zeitfenster durch Kombinieren von unterschiedlichen Zeitfenstern mit erhöhter oder besonders hoher Korrelation oder Antikorrelation ermittelt werden.

Nach einer weiteren vorteilhaften Ausführungsform der Erfindung kann eine Vielzahl von unterschiedlichen Zeitfenstern generiert werden, wobei die Generierung mittels eines numerischen Optimierungsverfahrens derart gesteuert wird, dass ein jeweiliger Korrelationswert der generierten Zeitfenster optimiert wird. Auf diese Weise können besonders hochkorrelierende Trainingsdaten gewonnen werden, die sich in der Regel als besonders trainingsfördernd erweisen.

Vorzugsweise kann als Optimierungsverfahren ein Gradientenabstiegsverfahren, eine Partikelschwarmoptimierung und/oder ein genetisches Optimierungsverfahren verwendet werden. Für die vorstehenden Optimierungsverfahren sind eine Vielzahl von Implementierungen verfügbar.

Nach einer weiteren vorteilhaften Ausführungsform der Erfindung können die Steueraktionsdaten unterschiedliche Steueraktionen spezifizierende Aktionskomponenten umfassen. Die zeitliche Veränderung der Steueraktionsdaten kann dann spezifisch für eine jeweilige Aktionskomponente erfasst werden, und die Ermittlung der Korrelationswerte kann spezifisch für eine jeweilige Aktionskomponente erfolgen. Abhängig davon kann das resultierende Zeitfenster durch Kombination von aktionskomponentenspezifischen Zeitfenstern ermittelt werden. Insbesondere können zu diesem Zweck hochkorrelierende aktionskomponentenspezifische Zeitfenster mittels aktionskomponentenspezifischer Gewichte kombiniert werden.

Weiterhin können die Zustandsdaten unterschiedliche Zustandsparameter des technischen Systems spezifizierende Zustandskomponenten umfassen. Die Ermittlung der Korrelationswerte kann dann spezifisch für eine jeweilige Zustandskomponente erfolgen. Abhängig davon kann das resultierende Zeitfenster durch Kombination von zustandskomponentenspezifischen Zeitfenstern ermittelt werden. Insbesondere können zu diesem Zweck hochkorrelierende zustandskomponentenspezifische Zeitfenster mittels zustandskomponentenspezifischer Gewichte kombiniert werden.

Vorzugsweise kann eine Vielzahl zeitlicher Veränderungen der Steueraktionsdaten erfasst werden und über unterschiedliche, relativ zur jeweiligen zeitlichen Veränderung der Steueraktionsdaten definierte Zeitfenster jeweils mit einer Vielzahl von zeitlichen Veränderungen der Zustandsdaten korreliert werden, wobei jeweils ein zeitfensterspezifischer Korrelationswert ermittelt wird. Auf diese Weise kann eine statistische Signifikanz der ermittelten Korrelationswerte in der Regel erheblich gesteigert werden.

Nach einer weiteren vorteilhaften Ausführungsform der Erfindung kann das resultierende Zeitfenster durch eine Vereinigung, einen Durchschnitt und/oder eine andere, insbesondere gewichtete Kombination von unterschiedlichen Zeitfenstern ermittelt werden. Zur Gewichtung können insbesondere aktionskomponentenspezifische und/oder zustandskomponentenspezifische Gewichte verwendet werden. Auf diese Weise können resultierende Zeitfenster ermittelt werden, die für alle oder zumindest für eine Mehrheit von Aktionskomponenten und/oder Zustandskomponenten stark korrelieren.

Nach einer vorteilhaften Weiterbildung der Erfindung können die Zustandsdaten und/oder die Steueraktionsdaten über ein Aggregationszeitfenster aggregiert werden. Die Ermittlung des resultierenden Zeitfensters kann dann anhand der aggregierten Zustandsdaten und/oder der aggregierten Steueraktionsdaten erfolgen. Durch eine solche Aggregation können Zustandsdaten und/oder Steueraktionsdaten zeitlich zusammengefasst und/oder reduziert werden. Beispielsweise indem fortlaufend gegebenenfalls gewichtete Mittelwerte, Mediane, Maxima, Minima und/oder andere Kombinationen mehrerer zeitlich aufeinanderfolgender Zustandsdaten und/oder Steueraktionsdaten gebildet werden. Auf diese Weise können zufallsbedingte oder anomale Schwankungen der Zustandsdaten und/oder Steueraktionsdaten zumindest teilweise ausgeglichen werden, die ansonsten eine Erkennung von kausalen Wirkungsbeziehungen erschweren könnten.

Vorzugsweise können unterschiedliche Aggregationszeitfenster verwendet werden, und die Ermittlung der Korrelationswerte kann spezifisch für ein jeweiliges Aggregationszeitfenster erfolgen. Abhängig davon kann ein hinsichtlich der Korrelationswerte optimiertes Aggregationszeitfenster ermittelt und verwendet werden.

Gemäß einer weiteren vorteilhaften Ausführungsform der Erfindung können außerhalb des resultierenden Zeitfensters befindliche Trainingsdaten beim Trainieren der Steuereinrichtung unterdrückt oder verworfen werden. Alternativ oder zusätzlich können die außerhalb des resultierenden Zeitfensters befindlichen Trainingsdaten beim Training geringer gewichtet werden als die extrahierten Trainingsdaten.

Ein Ausführungsbeispiel der Erfindung wird nachfolgend anhand der Zeichnung näher erläutert. Dabei zeigen jeweils in schematischer Darstellung:
- Figur 1: eine Gasturbine mit einer erfindungsgemäßen Steuereinrichtung,
- Figur 2: eine erfindungsgemäße Steuereinrichtung in einer Trainingsphase und
- Figur 3: ein Diagramm mit gegen die Zeit aufgetragenen Trainingsdaten.

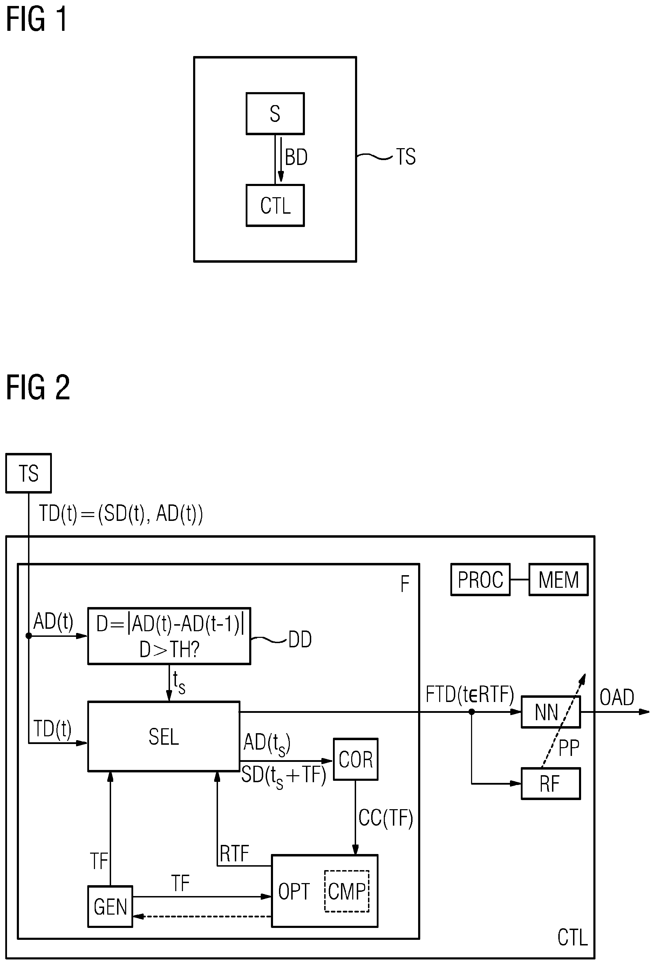

**Figur 1** veranschaulicht beispielhaft eine Gasturbine als technisches System TS. Alternativ oder zusätzlich kann das technische System TS auch eine Windturbine, eine Solarkraftanlage, ein Kraftwerk, eine Verbrennungskraftmaschine, einen Roboter, eine Fertigungsanlage, ein Kraftfahrzeug, ein Verkehrsleitsystem, eine Energiesteuerung für ein Gebäude, ein Energieübertragungsnetz, einen 3D-Drucker oder eine andere Maschine umfassen.

Die Gasturbine TS ist mit einer rechnergestützt trainierbaren Steuereinrichtung CTL gekoppelt, die als Teil der Gasturbine TS oder ganz oder teilweise extern zur Gasturbine TS implementiert sein kann. Die Steuereinrichtung CTL dient zum Steuern des technischen Systems TS und ist zu diesem Zweck mittels eines maschinellen Lernverfahrens trainierbar. Unter einem Steuern des technischen Systems TS sei hierbei auch eine Regelung des technischen Systems TS sowie eine Ausgabe und Verwendung von steuerungsrelevanten, d.h. zum Steuern des technischen Systems TS beitragenden Daten und Steuersignalen verstanden.

Derartige steuerungsrelevante Daten können insbesondere Steueraktionsdaten, Prognosedaten, Überwachungsdaten und/oder Klassifikationsdaten umfassen, die insbesondere zur Betriebsoptimierung, Überwachung oder Wartung des technischen Systems TS und/oder zur Verschleiß- oder Beschädigungserkennung verwendet werden können.

Die Gasturbine TS verfügt weiterhin über mit der Steuereinrichtung CTL gekoppelte Sensoren S, die fortlaufend einen oder mehrere Betriebsparameter des technischen Systems TS messen und in Form von Betriebsdaten BD zur Steuereinrichtung CTL übermitteln. Neben den Sensordaten können durch die Steuereinrichtung CTL noch weitere Betriebsparameter aus anderen Datenquellen des technischen Systems TS oder aus externen Datenquellen erfasst werden.

Als Betriebsdaten BD sind hier und im Folgenden insbesondere physikalische, regelungstechnische, wirkungstechnische und/oder bauartbedingte Betriebsgrößen, Eigenschaftsdaten, Leistungsdaten, Wirkungsdaten, Zustandsdaten, Systemdaten, Vorgabewerte, Steuerdaten, Sensordaten, Messwerte, Umgebungsdaten, Überwachungsdaten, Prognosedaten, Analysedaten und/oder andere im Betrieb des technischen Systems TS anfallende und/oder einen Betriebszustand oder eine Steueraktion des technischen Systems TS beschreibende Daten zu verstehen. Dies können z.B. Daten über Temperatur, Druck, Emissionen, Vibrationen, Schwingungszustände oder Ressourcenverbrauch des technischen Systems TS sein. Speziell bei einer Gasturbine können die Betriebsdaten BD eine Turbinenleistung, eine Rotationsgeschwindigkeit, Vibrationsfrequenzen oder Vibrationsamplituden betreffen. Die Betriebsdaten BD können skalar, vektorwertig oder tensorwertig und insbesondere hochdimensional sein.

**Figur 2** zeigt in schematischer Darstellung eine erfindungsgemäße Steuereinrichtung CTL in einer Trainingsphase, durch die die Steuereinrichtung CTL für eine optimierte Steuerung eines technischen Systems TS konfiguriert wird. Die Steuereinrichtung CTL ist an das technische System TS gekoppelt.

Die Steuereinrichtung CTL sowie das technische System TS können wie in Zusammenhang mit Figur 1 beschrieben ausgestaltet oder implementiert sein. Die Steuereinrichtung CTL verfügt über einen oder mehrere Prozessoren PROC zum Ausführen aller Verfahrensschritte der Steuereinrichtung CTL sowie über einen oder mehrere mit dem Prozessor PROC gekoppelte Speicher MEM zum Speichern der von der Steuereinrichtung CTL zu verarbeitenden Daten.

Vom technischen System TS wird eine zeitliche Abfolge von Betriebsdaten, die sowohl Zustandsdaten als auch Steueraktionsdaten umfassen, sensorisch erfasst und als Trainingsdaten TD(t) zur Steuerungseinrichtung CTL übermittelt. t bezeichnet hier und im Folgenden eine zeitliche Abhängigkeit einer jeweiligen Größe bzw. deren Zuordnung zu einem jeweiligen Zeitpunkt t.

Die zeitliche Abfolge der Trainingsdaten TD(t) stammt im vorliegenden Ausführungsbeispiel vom technischen System TS. Im Allgemeinen können indessen beliebige zum Training verwendbare historische, aktuelle und/oder simulierte Betriebsdaten des technischen Systems TS oder ähnlicher technischer Systeme als Trainingsdaten verwendet werden.

Die Trainingsdaten TD(t) enthalten insbesondere eine zeitliche Abfolge von Zustandsdaten SD(t) sowie eine zeitliche Abfolge von Steueraktionsdaten AD(t). Die Zustandsdaten SD(t) spezifizieren hierbei Betriebszustände des technischen Systems TS während die Steueraktionsdaten AD(t) am technischen System TS vorgenommene Steueraktionen spezifizieren. Die Betriebszustände können beispielsweise eine Leistung, eine Drehzahl, eine Temperatur, einen Druck, einen Schwingungszustand und/oder eine Emission des technischen Systems TS betreffen.

Die Steuereinrichtung CTL verfügt über ein datengetrieben trainierbares Rechenmodul NN, das ein maschinelles Lernverfahren implementiert. Im vorliegenden Ausführungsbeispiel verfügt das trainierbare Rechenmodul NN über ein künstliches neuronales Netz, mittels dessen ein Verfahren des bestärkenden Lernens, häufig auch als Reinforcement-Learning bezeichnet, implementiert wird. Ein solches trainierbares Rechenmodul oder eine entsprechend trainierte Steuereinrichtung wird häufig auch als trainierbarer oder lernender Policy Agent oder als Steuermodell bezeichnet. Das neuronale Netz des Rechenmoduls NN weist eine Trainingsstruktur auf, die sich während eines Trainings ausbildet.

Unter einem Training sei allgemein eine Optimierung einer Abbildung von Eingabeparametern eines parametrisierten Systemmodells, z.B. eines neuronalen Netzes, auf einen oder mehrere Ausgabeparameter verstanden. Diese Abbildung wird nach vorgegebenen, gelernten und/oder zu lernenden Kriterien während einer Trainingsphase optimiert. Als Kriterium kann z.B. bei Steuermodellen ein Erfolg von Steueraktionen herangezogen werden, der z.B. einen Ertrag, einen Ressourcenbedarf, einen Schadstoffausstoß, einen Verschleiß oder einen anderen eine Performanz des technischen Systems quantifizierenden Parameter betreffen kann. Eine Trainingsstruktur kann z.B. eine Vernetzungsstruktur von Neuronen eines neuronalen Netzes und/oder Gewichte von Verbindungen zwischen den Neuronen umfassen, die durch das Training so ausgebildet werden, dass die Kriterien möglichst gut erfüllt werden.

Im vorliegenden Ausführungsbeispiel wird das Rechenmodul NN mittels eines Verfahrens des bestärkenden Lernens darauf trainiert, das technische System TS optimiert zu steuern. Dabei wird das Rechenmodul NN darauf trainiert, anhand von als Eingabeparameter zugeführten Betriebsdaten des technischen Systems TS optimierte Steueraktionsdaten OAD als Ausgabeparameter auszugeben, die - wenn auf das technische Systems TS angewandt -, eine Zielfunktion RF optimieren. Für derartige Lernverfahren steht eine Vielzahl von bekannten Standardroutinen zur Verfügung.

Die Zielfunktion RF berechnet aus zugeführten Betriebsdaten einen Performanzparameter PP, der durch das genannte Lernverfahren zu optimieren ist. Zu diesem Zweck werden die durch die Zielfunktion RF berechneten Werte des Performanzparameters PP dem Rechenmodul NN zugeführt, wie in Figur 2 durch einen strichlierten Pfeil angedeutet ist. Damit wird die Trainingsstruktur des neuronalen Netzes mittels des Lernverfahrens derart angepasst, dass die Ausgabeparameter OAD des neuronalen Netzes den Performanzparameter PP optimieren.

Durch den Performanzparameter PP wird ein erwünschtes Verhalten des technischen Systems TS quantifiziert. So kann als Performanzparameter PP beispielsweise eine ggf. gewichtete Kombination von Ertrag, Ausbeute, Wirkungsgrad, Schadstoffausstoß, Verschleiß und Ressourcenverbrauch des technischen Systems TS oder eines Teils davon oder ein anderer eine Performanz des technischen Systems TS betreffender Parameter verwendet werden. Durch Optimierung des Performanzparameters PP wird das Rechenmodul NN auf eine Ausgabe von optimierten Steueraktionsdaten OAD trainiert und so die Steuereinrichtung CTL für eine optimierte Steuerung des technischen Systems TS konfiguriert.

Eine Zielfunktion, hier RF, zur Berechnung eines Performanzparameters, hier PP, wird häufig auch als Belohnungsfunktion oder Kostenfunktion bezeichnet. Der Performanzparameter gibt vorzugsweise einen langfristigen, kumulativen und/oder diskontierten Gewinn oder eine Gesamtbelohnung an.

Die in die Zielfunktion RF eingehenden Betriebsdaten werden häufig auch als Targetdaten bezeichnet und sind in der Regel ein Teil der in den Betriebsdaten enthaltenen Zustandsdaten des technischen Systems TS. Zur Berechnung von Performanzparametern aus Targetdaten des technischen Systems TS ist eine Vielzahl von Verfahren bekannt.

Es erweist sich, dass ein Trainingserfolg des Rechenmoduls NN erheblich von einer Qualität der Trainingsdaten TD abhängig ist. In diesem Sinne soll erfindungsgemäß angestrebt werden, diejenigen Trainingsdaten zu finden und zu extrahieren, die für das Training oder einen Trainingserfolg besonders nützlich sind.

Zur Selektion und Extraktion dieser trainingsfördernden Trainingsdaten enthält die Steuereinrichtung CTL ein Filter F, zu dem die Trainingsdaten TD(t) übermittelt werden. Das Filter F dient dem Zweck, Zeitintervalle oder Zeitfenster zu identifizieren, die bevorzugt trainingsfördernde Trainingsdaten enthalten und diese trainingsfördernden Trainingsdaten spezifisch zu extrahieren bzw. herauszufiltern.

Es erweist sich, dass diejenigen Trainingsdaten besonders trainingsfördernd sind, die Information über Auswirkungen von Steuereingriffen auf Zustände des technischen Systems TS enthalten. Durch Fokussierung des Lernverfahrens auf derartige Trainingsdaten können Wirkungszusammenhänge zwischen Steuereingriffen und deren Auswirkungen in der Regel erheblich schneller und effizienter erlernt werden. Somit erweist es sich als vorteilhaft, diejenigen Zeitfenster zu identifizieren, in denen Steueraktionen angewandt werden oder wechseln, d.h. in denen sich Steueraktionen zeitlich verändern.

Zum Feststellen einer zeitlichen Veränderung der Steueraktionen umfasst das Filter F einen Veränderungsdetektor DD, zu dem die zeitliche Abfolge der Steueraktionsdaten AD(t) übermittelt wird. Die Steueraktionsdaten AD(t) werden hierzu durch das Filter F aus den Trainingsdaten TD(t) spezifisch extrahiert.

Zur Detektion der zeitlichen Veränderung der Steueraktionsdaten AD(t) ermittelt der Veränderungsdetektor DD fortlaufend ein Veränderungsmaß D. Letzteres kann beispielsweise als Betrag einer Differenz aufeinanderfolgender Steueraktionsdaten |AD(t)-AD(t-1)| oder als Quadrat einer solchen Differenz (AD(t)-AD(t-1))² berechnet werden. Bei mehrere Aktionskomponenten aufweisenden Steueraktionsdaten AD(t) können entsprechend mehrdimensionale euklidische oder gewichtete Abstände aufeinanderfolgender Steueraktionsvektoren als Veränderungsmaß D ermittelt werden. Insbesondere können die Steueraktionsdaten AD(t) zur Ermittlung ihrer zeitlichen Veränderung über ein Aggregationszeitfenster aggregiert werden. Beispielsweise durch fortlaufende Bildung von gleitenden Mittelwerten. Das Veränderungsmaß D kann dann beispielsweise durch einen Betrag oder ein Quadrat einer Differenz aufeinanderfolgender Mittelwerte von Steueraktionsdaten bestimmt werden. Auf diese Weise können anomale oder zufallsbedingte Schwankungen der Steueraktionsdaten AD(t) zumindest teilweise ausgeglichen werden.

Der Veränderungsdetektor DD vergleicht die fortlaufend ermittelten Veränderungsmaße D mit einem vorgegebenen oder anderweitig bestimmten Schwellwert TH und stellt infolge einer Überschreitung dieses Schwellwerts TH eine zeitliche Veränderung der Steueraktionsdaten AD(t) fest. Bei mehrkomponentigen Steueraktionsdaten können entsprechend komponentenspezifische Schwellwerte vorgesehen sein. Alternativ oder zusätzlich kann der Veränderungsdetektor DD die Abfolge der Steueraktionsdaten AD(t) nach einem vorgegebenen oder anderweitig bestimmten Veränderungsmuster durchsuchen und infolge des Auftretens dieses Veränderungsmusters eine zeitliche Veränderung der Steueraktionsdaten AD(t) feststellen.

Infolge einer Feststellung einer jeweiligen Veränderung wird eine jeweilige Veränderungsstelle in der Abfolge der Steueraktionsdaten AD(t) ermittelt. Im vorliegenden Ausführungsbeispiel wird als jeweilige Veränderungsstelle ein jeweiliger Veränderungszeitpunkt tₛ ermittelt, an dem der Schwellwert TH durch das jeweilige Veränderungsmaß D überschritten wird.

Die ermittelten Veränderungszeitpunkte tₛ werden vom Veränderungsdetektor DD zu einem Selektionsmodul SEL des Filters F übermittelt. Zu diesem Selektionsmodul SEL werden auch die Trainingsdaten TD(t), d.h. die Steueraktionsdaten AD(t) sowie die Zustandsdaten SD(t) übermittelt.

Anhand der Veränderungszeitpunkte tₛ selektiert und extrahiert das Selektionsmodul SEL jeweils spezifisch diejenigen der Steueraktionsdaten AD(t), die am oder um einen jeweiligen Veränderungszeitpunkt tₛ vorliegen. Diese Steueraktionsdaten werden im Folgenden auch kurz als AD(tₛ) bezeichnet.

Das Filter F verfügt weiterhin über einen Zeitfenstergenerator GEN zum Generieren einer Vielzahl von Zeitfenstern TF. Diese können insbesondere jeweils durch ein oder mehrere Zeitintervalle spezifiziert werden. Letztere können jeweils durch eine Anfangszeit und eine Endzeit oder durch einen Zeitpunkt und eine Intervalllänge quantifiziert werden. Die Zeitintervalle können dabei absolut oder relativ zu einem Veränderungszeitpunkt oder zu einem anderen Ereignis angegeben werden. Im vorliegenden Ausführungsbeispiel sind die Zeitfenster relativ zu einem jeweiligen Veränderungszeitpunkt tₛ definiert.

Die generierten Zeitfenster TF werden vom Zeitfenstergenerator GEN zum Selektionsmodul SEL übermittelt. Anhand der übermittelten Zeitfenster TF selektiert und extrahiert das Selektionsmodul SEL jeweils spezifisch diejenigen der Zustandsdaten SD(t), die sich relativ zum jeweiligen Veränderungszeitpunkt tₛ innerhalb dieser Zeitfenster TF befinden. Für ein Zeitfenster TF = [DL, DL+L] mit relativ zum Veränderungszeitpunkt tₛ angegebener Anfangszeit DL und Intervalllänge L können die extrahierten Zustandsdaten beispielsweise gegeben sein durch eine Menge {SD(tₛ+DL),..., SD(tₛ+DL+L)} oder allgemein als {SD(t): t-tₛ ∈ TF}. Die relative Anfangszeit DL kann hier gewissermaßen als Verzögerungszeit gegenüber dem Veränderungszeitpunkt tₛ aufgefasst werden. Die für einen jeweiligen Veränderungszeitpunkt tₛ und ein jeweiliges Zeitfenster TF extrahierten Zustandsdaten werden im Folgenden auch kurz als SD(tₛ+TF) bezeichnet.

Die extrahierten Steueraktionsdaten AD(tₛ) werden zusammen mit den extrahierten Zustandsdaten SD(tₛ+TF) vom Selektionsmodul SEL zu einem Korrelationsmodul COR des Filters F übermittelt. Anhand der extrahierten Steueraktionsdaten AD(tₛ) wird durch das Korrelationsmodul COR eine zeitliche Veränderung ΔAD der Steueraktionsdaten AD(t) am oder um den jeweiligen Veränderungszeitpunkt tₛ quantifiziert. Dies kann beispielsweise durch Differenzbildung gemäß ΔAD = AD(tₛ+l) - AD(tₛ-l) erfolgen, wobei l eine vorgegebene kleine Zeitdauer ist. Sofern die Steueraktionsdaten AD(t) zur Ermittlung ihrer zeitlichen Veränderung über ein Aggregationszeitfenster aggregiert werden, kann ihre zeitliche Veränderung ΔAD in analoger Weise durch Differenzbildung zwischen aufeinanderfolgenden aggregierten Werten von Steueraktionsdaten bestimmt werden. Bei mehrkomponentigen Steueraktionsdaten AD(t) können entsprechend jeweils mehrere Veränderungskomponenten ΔAD wie vorstehend beschrieben quantifiziert werden.

Weiterhin wird durch das Korrelationsmodul COR anhand der extrahierten Zustandsdaten SD(tₛ+TF) deren zeitliche Veränderung ΔSD innerhalb des jeweiligen Zeitfensters TF quantifiziert. Dies kann beispielsweise durch Differenzbildung gemäß ΔSD = SD(tₛ+DL+L) - SD(tₛ+DL) erfolgen. Sofern die Zustandsdaten SD(t) zur Ermittlung ihrer zeitlichen Veränderung über ein Aggregationszeitfenster aggregiert werden, kann ihre zeitliche Veränderung ΔSD in analoger Weise durch Differenzbildung zwischen aufeinanderfolgenden aggregierten Werten von Zustandsdaten bestimmt werden. Bei mehrkomponentigen Zustandsdaten SD(t) können entsprechend jeweils mehrere Veränderungskomponenten ΔSD wie vorstehend beschrieben quantifiziert werden.

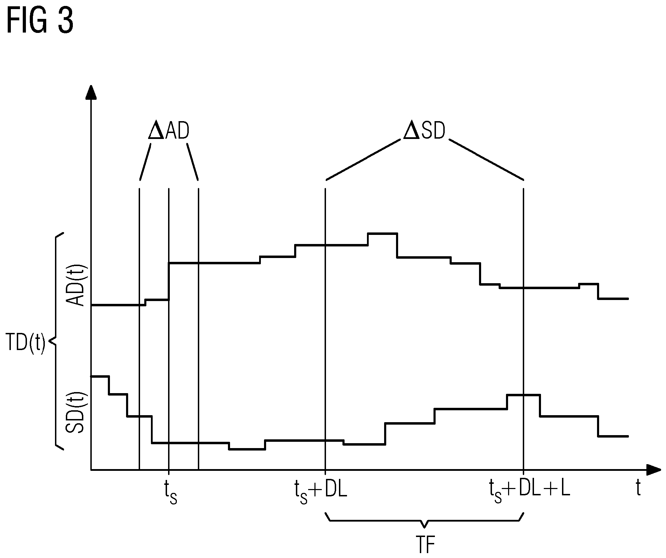

Die Anwendung eines jeweiligen Zeitfensters TF wird anhand von **Figur 3** weiter veranschaulicht. Figur 3 zeigt ein Diagramm, in dem eine Abfolge von Trainingsdaten TD(t) gegen die Zeit t aufgetragen ist. Die Trainingsdaten TD(t) umfassen Zustandsdaten SD(t), die im unteren Teil des Diagramms veranschaulicht sind und Steueraktionsdaten AD(t), die im oberen Teil veranschaulicht sind. Aus Übersichtlichkeitsgründen ist nur jeweils ein Verlauf eines einzigen Werts in stark vereinfachter Weise dargestellt.

Die zeitliche Abfolge der Steueraktionsdaten AD(t) zeigt mehrere zeitliche Veränderungen. Für das vorliegende Ausführungsbeispiel sei angenommen, dass ein ermitteltes Veränderungsmaß D innerhalb des dargestellten Zeitintervalls nur am Veränderungszeitpunkt tₛ einen Schwellwert TH übertrifft. Somit wird eine zeitliche Veränderung ΔAD der Steueraktionsdaten AD(t) in diesem Zeitintervall nur am oder um den Veränderungszeitpunkt tₛ festgestellt. Infolgedessen wird eine zeitliche Veränderung ΔSD der Zustandsdaten SD(t) innerhalb eines relativ zum Veränderungszeitpunkt tₛ definieren Zeitfensters TF ermittelt. Der Beginn des Zeitfensters TF ist dabei um eine Verzögerungszeit DL gegenüber dem festgestellten Veränderungszeitpunkt tₛ verschoben. Das Ende des Zeitfensters TF wird entsprechend durch seine Länge L definiert.

Der weitere Verlauf des erfindungsgemäßen Verfahrens wird wieder anhand von **Figur 2** veranschaulicht.

Erfindungsgemäß werden durch das Korrelationsmodul COR für eine Vielzahl von unterschiedlichen Zeitfenstern TF die zeitlichen Veränderungen ΔAD der Steueraktionsdaten mit den zeitlichen Veränderungen ΔSD der Zustandsdaten im jeweiligen Zeitfenster TF korreliert. Die Korrelation wird jeweils über eine Vielzahl von detektierten Veränderungszeitpunkten tₛ gebildet. Hierzu kann beispielsweise eine Korrelationssumme, ein Korrelationsintegral und/oder ein Korrelationskoeffizient mit numerischen Standardverfahren berechnet werden, um einen numerischen Korrelationswert zu erhalten.

Im vorliegenden Ausführungsbeispiel wird so für jedes der Zeitfenster TF ein für dieses Zeitfenster TF spezifischer Korrelationswert CC(TF) ermittelt. Die Korrelationswerte CC(TF) werden vom Korrelationsmodul COR zu einem Optimierungsmodul OPT des Filters F übertragen. Zum Optimierungsmodul OPT werden darüber hinaus auch die Zeitfenster TF vom Zeitfenstergenerator GEN übermittelt.

Das Optimierungsmodul OPT vergleicht die für die unterschiedlichen Zeitfenster TF ermittelten Korrelationswerte CC(TF) mittels eines Vergleichers CMP und ermittelt so eines oder mehrere der Zeitfenster TF, in denen die zeitlichen Veränderungen ΔSD der Zustandsdaten eine hohe oder höchste Korrelation oder eine hohe oder höchste Antikorrelation mit den zeitlichen Veränderungen ΔAD der Steueraktionsdaten aufweisen. Darüber hinaus werden durch das Optimierungsmodul OPT abhängig von den Korrelationswerten CC(TF) gezielt Parameter der Zeitfenster TF variiert, um ein hinsichtlich der Korrelationswerte CC(TF) optimiertes Zeitfenster zu finden. Vorzugsweise wird der Zeitfenstergenerator GEN durch das Optimierungsmodul OPT derart gesteuert, dass ein jeweiliger Korrelationswert CC(TF) der generierten Zeitfenster TF optimiert wird. Zu diesem Zweck können vorzugsweise eine Partikelschwarmoptimierung, ein Gradientenabstiegsverfahren und/oder ein genetisches Optimierungsverfahren verwendet werden.

Falls die Steueraktionsdaten AD(t) und/oder die Zustandsdaten SD(t) über ein Aggregationszeitfenster aggregiert werden, kann eine Länge oder eine Position eines jeweiligen Aggregationszeitfensters ebenfalls durch das Optimierungsmodul OPT optimiert werden, um ein hinsichtlich der Korrelationswerte CC(TF) optimiertes Aggregationszeitfenster zu ermitteln und im weiteren Verfahren zu verwenden.

Anhand der korrelationsoptimierenden Zeitfenster werden durch das Optimierungsmodul OPT ein oder mehrere resultierende Zeitfenster RTF ermittelt, in denen die zeitlichen Veränderungen ΔSD der Zustandsdaten besonders stark mit den zeitlichen Veränderungen ΔAD der Steueraktionsdaten korrelieren. Die resultierenden Zeitfenster RTF können insbesondere durch einen Durchschnitt, eine Vereinigung und/oder eine andere, insbesondere gewichtete Kombination von unterschiedlichen Zeitfenstern TF ermittelt werden. Zur Gewichtung können insbesondere aktionskomponentenspezifische und/oder zustandskomponentenspezifische Gewichte verwendet werden. Auf diese Weise können resultierende Zeitfenster RTF ermittelt werden, deren Zustandsdaten SD(tₛ+RTF) für alle oder zumindest für eine Mehrheit von Aktionskomponenten und/oder Zustandskomponenten stark korrelieren. Die resultierenden Zeitfenster RTF werden durch das Optimierungsmodul OPT zum Selektionsmodul SEL übermittelt.

Anhand der resultierenden Zeitfenster RTF selektiert und extrahiert das Selektionsmodul SEL spezifisch diejenigen der Trainingsdaten TD(t), die sich innerhalb dieser resultierenden Zeitfenster RTF befinden. Diese innerhalb der resultierenden Zeitfenster RTF befindlichen Trainingsdaten werden im Folgenden als extrahierte oder gefilterte Trainingsdaten FTD bezeichnet. Für ein resultierendes Zeitfenster RTF = [t₁, t₂] mit Anfangszeit t₁ und Endzeit t₂ können die extrahierten Trainingsdaten beispielsweise gegeben sein durch FTD = {TD(t₁),..., TD(t₂)} oder allgemein als FTD = {TD(t): t∈RTF} .

Die zeitfensterspezifisch selektierten und gefilterten Trainingsdaten FTD werden vom Selektionsmodul SEL bzw. vom Filter F zum Rechenmodul NN übermittelt. Weiterhin werden die gefilterten Trainingsdaten FTD der Zielfunktion RF zugeführt, die aus den in den extrahierten Trainingsdaten FTD enthaltenen Betriebsdaten und insbesondere aus darin enthaltenen Zustandsdaten den Performanzparameter PP berechnet. Anhand der extrahierten Trainingsdaten FTD sowie dem berechneten Performanzparameter PP wird das neuronale Netz des Rechenmoduls NN, wie oben bereits angedeutet, derart trainiert, dass Steueraktionsdaten OAD ausgegeben werden, die - wenn auf das technische Systems TS angewandt -, den Performanzparameter PP optimieren.

Im vorliegenden Ausführungsbeispiel werden dem Rechenmodul NN keine außerhalb der resultierenden Zeitfenster RTF befindlichen Trainingsdaten zugeführt und das neuronale Netz damit ausschließlich anhand der extrahierten Trainingsdaten FTD trainiert. Wie oben bereits erwähnt, kann alternativ oder zusätzlich zum neuronalen Netz insbesondere ein Verfahren des bestärkenden Lernens im Rechenmodul NN implementiert sein.

Alternativ können dem Rechenmodul NN auch außerhalb der resultierenden Zeitfenster RTF befindliche Trainingsdaten zugeführt werden. In diesem Fall kann das Rechenmodul NN zumindest bevorzugt oder überwiegend anhand der gefilterten Trainingsdaten FTD trainiert werden. So können die gefilterten Trainingsdaten FTD beim Training stärker gewichtet werden als die außerhalb der resultierenden Zeitfenster RTF befindlichen Trainingsdaten, oder letztere können reduziert, ausgedünnt und/oder teilweise verworfen werden.

Vorzugsweise können fortlaufend und aktuell erfasste Trainingsdaten TD(t) durch das Filter F fortlaufend gefiltert werden, und die Steuereinrichtung CTL kann im laufenden Betrieb anhand der gefilterten Trainingsdaten FTD weitertrainiert werden.

Indem das neuronale Netz und damit das Rechenmodul NN trainiert wird, wird die Steuereinrichtung CTL für eine optimierte Steuerung des technischen Systems TS konfiguriert. Beim Steuern wendet die Steuereinrichtung CTL die durch das Training erlernte Steuerstrategie an, d.h. bildet aktuelle Systemzustände auf hinsichtlich der Zielfunktion RF optimale Steueraktionen bzw. Steueraktionsdaten OAD ab.

Durch die spezifische Filterung der Trainingsdaten wird das Rechenmodul NN durch besonders trainingsfördernde Trainingsdaten trainiert. Diese selektierten Trainingsdaten FTD enthalten besonders viele Korrelationen zwischen Steuereingriffen und deren Auswirkungen auf Systemzustände des technischen Systems TS und sind damit besonders repräsentativ für dessen Steuerung. Durch die spezifische Selektion der Trainingsdaten kann effektiv vermieden werden, dass redundante, weniger relevante oder weniger signifikante Information den Lernprozess stört oder verzögert. Es zeigt sich, dass durch die erfindungsgemäße Filterung der Trainingsdaten ein Trainingserfolg signifikant verbessert bzw. ein Trainingsaufwand signifikant verringert werden kann.

## Patentansprüche

1. Computerimplementiertes Verfahren zum Konfigurieren einer Steuereinrichtung (CTL) für ein technisches System (TS) mittels eines maschinellen Lernverfahrens, wobei
a) eine zeitliche Abfolge von Trainingsdaten (TD) für das maschinelle Lernverfahren erfasst wird, wobei die Trainingsdaten (TD) Zustände des technischen Systems (TS) spezifizierende Zustandsdaten (SD) sowie Steueraktionen des technischen Systems (TS) spezifizierende Steueraktionsdaten (AD) umfassen,
b) eine zeitliche Veränderung (ΔAD) der Steueraktionsdaten (AD) spezifisch erfasst wird,
c) die zeitliche Veränderung (ΔAD) der Steueraktionsdaten (AD) mit zeitlichen Veränderungen (ΔSD) der Zustandsdaten (SD) innerhalb unterschiedlicher Zeitfenster (TF) korreliert wird, wobei jeweils ein zeitfensterspezifischer Korrelationswert (CC) ermittelt wird,
d) abhängig von den ermittelten Korrelationswerten (CC) ein resultierendes Zeitfenster (RTF) ermittelt wird,
e) die innerhalb des resultierenden Zeitfensters (RTF) befindlichen Trainingsdaten (FTD) zeitfensterspezifisch extrahiert werden, und
f) die Steuereinrichtung (CTL) mittels des maschinellen Lernverfahrens anhand der extrahierten Trainingsdaten (FTD) trainiert und damit zum Steuern des technischen Systems (TS) konfiguriert wird.

2. Verfahren nach Anspruch 1, **dadurch gekennzeichnet,**
**dass** das technische System (TS) eine Gasturbine, eine Windturbine, eine Solarkraftanlage, ein Kraftwerk, eine Verbrennungskraftmaschine, einen Roboter, eine Fertigungsanlage, ein Kraftfahrzeug, ein Verkehrsleitsystem, eine Energiesteuerung für ein Gebäude, ein Energieübertragungsnetz, einen 3d-Drucker oder eine andere Maschine umfasst.

3. Verfahren nach einem der vorhergehenden Ansprüche, **dadurch gekennzeichnet,**
**dass** die Korrelationswerte (CC) für unterschiedliche Zeitfenster (TF) verglichen werden, und
**dass** abhängig davon ein hinsichtlich der Korrelationswerte (CC) optimiertes Zeitfenster als resultierendes Zeitfenster (RTF) ermittelt wird.

4. Verfahren nach einem der vorhergehenden Ansprüche, **dadurch gekennzeichnet,**
**dass** eine Vielzahl von unterschiedlichen Zeitfenstern (TF) generiert wird, wobei die Generierung mittels eines numerischen Optimierungsverfahrens derart gesteuert wird, dass ein jeweiliger Korrelationswert (CC) der generierten Zeitfenster (TF) optimiert wird.

5. Verfahren nach Anspruch 4, **dadurch gekennzeichnet,**
**dass** als Optimierungsverfahren ein Gradientenabstiegsverfahren, eine Partikelschwarmoptimierung und/oder ein genetisches Optimierungsverfahren verwendet wird.

6. Verfahren nach einem der vorhergehenden Ansprüche, **dadurch gekennzeichnet,**
**dass** die Steueraktionsdaten (AD) unterschiedliche Steueraktionen spezifizierende Aktionskomponenten umfassen,
**dass** die zeitliche Veränderung der Steueraktionsdaten (AD) spezifisch für eine jeweilige Aktionskomponente erfasst wird, dass die Ermittlung der Korrelationswerte (CC) spezifisch für eine jeweilige Aktionskomponente erfolgt, und
**dass** abhängig davon das resultierende Zeitfenster (RTF) durch Kombination von aktionskomponentenspezifischen Zeitfenstern ermittelt wird.

7. Verfahren nach einem der vorhergehenden Ansprüche, **dadurch gekennzeichnet,**
**dass** die Zustandsdaten (SD) unterschiedliche Zustandsparameter des technischen Systems (TS) spezifizierende Zustandskomponenten umfassen,
**dass** die Ermittlung der Korrelationswerte (CC) spezifisch für eine jeweilige Zustandskomponente erfolgt, und
**dass** abhängig davon das resultierende Zeitfenster (RTF) durch Kombination von zustandskomponentenspezifischen Zeitfenstern ermittelt wird.

8. Verfahren nach einem der vorhergehenden Ansprüche, **dadurch gekennzeichnet,**
**dass** eine Vielzahl zeitlicher Veränderungen (ΔAD) der Steueraktionsdaten (AD) erfasst wird und über unterschiedliche, relativ zur jeweiligen zeitlichen Veränderung (ΔAD) der Steueraktionsdaten (AD) definierte Zeitfenster (TF) jeweils mit einer Vielzahl von zeitlichen Veränderungen (ΔSD) der Zustandsdaten (SD) korreliert wird, wobei jeweils ein zeitfensterspezifischer Korrelationswert (CC) ermittelt wird.

9. Verfahren nach einem der vorhergehenden Ansprüche, **dadurch gekennzeichnet,**
**dass** das resultierende Zeitfenster (RTF) durch eine Vereinigung, einen Durchschnitt und/oder eine andere, insbesondere gewichtete Kombination von unterschiedlichen Zeitfenstern (TF) ermittelt wird.

10. Verfahren nach einem der vorhergehenden Ansprüche,
**dadurch gekennzeichnet,**
**dass** die Zustandsdaten (SD) und/oder die Steueraktionsdaten (AD) über ein Aggregationszeitfenster aggregiert werden, und dass die Ermittlung des resultierenden Zeitfensters (RTF) anhand der aggregierten Zustandsdaten (SD) und/oder der aggregierten Steueraktionsdaten (AD) erfolgt.

11. Verfahren nach Anspruch 10, **dadurch gekennzeichnet,**
**dass** unterschiedliche Aggregationszeitfenster verwendet werden,
**dass** die Ermittlung der Korrelationswerte (CC) spezifisch für ein jeweiliges Aggregationszeitfenster erfolgt, und
**dass** abhängig davon ein hinsichtlich der Korrelationswerte (CC) optimiertes Aggregationszeitfenster ermittelt und verwendet wird.

12. Verfahren nach einem der vorhergehenden Ansprüche, **dadurch gekennzeichnet,**
**dass** außerhalb des resultierenden Zeitfensters (RTF) befindliche Trainingsdaten (TD) beim Trainieren der Steuereinrichtung (CTL) unterdrückt oder verworfen werden.

13. Steuereinrichtung (CTL) zum Steuern eines technischen Systems (TS), eingerichtet zum Ausführen eines Verfahrens nach einem der vorhergehenden Ansprüche.

14. Computerprogrammprodukt eingerichtet zum Ausführen eines Verfahrens nach einem der Ansprüche 1 bis 12 auf einem Computer.

15. Computerlesbares Speichermedium mit einem Computerprogrammprodukt nach Anspruch 14.

## Claims

1. Computer-implemented method for configuring a control device (CTL) for a technical system (TS) by way of a machine learning method, wherein
a) a temporal sequence of training data (TD) is recorded for the machine learning method, wherein the training data (TD) comprise state data (SD) specifying states of the technical system (TS) and control action data (AD) specifying control actions of the technical system (TS),
b) a temporal change (ΔAD) in the control action data (AD) is specifically recorded,
c) the temporal change (ΔAD) in the control action data (AD) is correlated with temporal changes (ΔSD) in the state data (SD) within different time windows (TF), wherein a respective time window-specific correlation value (CC) is determined,
d) a resulting time window (RTF) is determined depending on the determined correlation values (CC),
e) the training data (FTD) located within the resulting time window (RTF) are extracted on a time window-specific basis, and
f) the control device (CTL) is trained based on the extracted training data (FTD) by way of the machine learning method and is thus configured to control the technical system (TS).

2. Method according to Claim 1, **characterized in that** the technical system (TS) comprises a gas turbine, a wind turbine, a solar power installation, a power plant, a combustion engine, a robot, a manufacturing installation, a motor vehicle, a traffic control system, an energy controller for a building, an energy transmission grid, a 3D printer or another machine.

3. Method according to either of the preceding claims, **characterized**
**in that** the correlation values (CC) for different time windows (TF) are compared, and
**in that**, depending thereon, a time window that is optimized with regard to the correlation values (CC) is determined as resulting time window (RTF).

4. Method according to one of the preceding claims, **characterized**
**in that** a multiplicity of different time windows (TF) is generated, wherein the generation is controlled by way of a numerical optimization method such that a respective correlation value (CC) of the generated time windows (TF) is optimized.

5. Method according to Claim 4, **characterized**
**in that** a gradient descent method, a particle swarm optimization and/or a genetic optimization method is used as optimization method.

6. Method according to one of the preceding claims, **characterized**
**in that** the control action data (AD) comprise action components specifying different control actions,
**in that** the temporal change in the control action data (AD) is recorded specifically for a respective action component,
**in that** the correlation values (CC) are determined specifically for a respective action component, and
**in that**, depending thereon, the resulting time window (RTF) is determined by combining action component-specific time windows.

7. Method according to one of the preceding claims, **characterized**
**in that** the state data (SD) comprise state components specifying different state parameters of the technical system (TS),
**in that** the correlation values (CC) are determined specifically for a respective state component, and
**in that**, depending thereon, the resulting time window (RTF) is determined by combining state component-specific time windows.

8. Method according to one of the preceding claims, **characterized**
**in that** a multiplicity of temporal changes (ΔAD) in the control action data (AD) is recorded and is correlated in each case with a multiplicity of temporal changes (ΔSD) in the state data (SD) over different time windows (TF) defined relative to the respective temporal change (ΔAD) in the control action data (AD), wherein a respective time window-specific correlation value (CC) is determined.

9. Method according to one of the preceding claims, **characterized**
**in that** the resulting time window (RTF) is determined through consolidating, averaging and/or another, in particular weighted combination of different time windows (TF).

10. Method according to one of the preceding claims, **characterized**
**in that** the state data (SD) and/or the control action data (AD) are aggregated over an aggregation time window, and
**in that** the resulting time window (RTF) is determined on the basis of the aggregated state data (SD) and/or of the aggregated control action data (AD).

11. Method according to Claim 10, **characterized**
**in that** different aggregation time windows are used,
**in that** the correlation values (CC) are determined specifically for a respective aggregation time window, and
**in that**, depending thereon, an aggregation time window that is optimized with regard to the correlation values (CC) is determined and used.

12. Method according to one of the preceding claims, **characterized**
**in that** training data (TD) located outside the resulting time window (RTF) are suppressed or discarded when training the control device (CTL).

13. Control device (CTL) for controlling a technical system (TS), configured to carry out a method according to one of the preceding claims.

14. Computer program product, configured to carry out a method according to one of Claims 1 to 12 on a computer.

15. Computer-readable storage medium containing a computer program product according to Claim 14.

## Revendications

1. Procédé informatisé pour configurer un dispositif de commande (CTL) pour un système technique (TS) à l'aide d'un procédé d'apprentissage automatique, dans lequel
a) une séquence chronologique de données d'apprentissage (TD) pour le procédé d'apprentissage automatique est enregistrée, dans lequel les données d'apprentissage (TD) comprennent des états du système technique (TS) spécifiant les données d'état (SD) et les actions de commande du système technique (TS) spécifiant des données d'action de commande (AD),
b) une évolution dans le temps (ΔAD) des données d'action de commande (AD) est spécifiquement enregistrée,
c) l'évolution dans le temps (ΔAD) des données d'action de commande (AD) est corrélée avec des évolutions dans le temps (ΔSD) des données d'état (SD) dans différentes fenêtres temporelles (TF), dans lequel une valeur de corrélation spécifique à la fenêtre temporelle (CC) est déterminée respectivement,
d) en fonction des valeurs de corrélation déterminées (CC), une fenêtre temporelle résultante (RTF) est déterminée,
e) les données d'apprentissage (FTD) situées dans la fenêtre temporelle résultante (RTF) sont extraites d'une manière spécifique à la fenêtre temporelle, et
f) le dispositif de commande (CTL) est entraîné à l'aide du procédé d'apprentissage automatique avec les données d'entraînement extraites (FTD) et est ainsi configuré pour contrôler le système technique (TS).

2. Procédé selon la revendication 1, **caractérisé en ce que** le système technique (TS) comprend une turbine à gaz, une éolienne, une centrale solaire, une centrale électrique, un moteur à combustion interne, un robot, une usine de fabrication, un véhicule à moteur, un système de contrôle du trafic, un système de contrôle de l'énergie pour un bâtiment, un réseau de transmission d'énergie, une imprimante 3D ou autre machine.

3. Procédé selon l'une des revendications précédentes, **caractérisé en ce que**
les valeurs de corrélation (CC) pour différentes fenêtres temporelles (TF) sont comparées, et
en fonction de cela, une fenêtre temporelle optimisée par rapport aux valeurs de corrélation (CC) est déterminée comme fenêtre temporelle résultante (RTF).

4. Procédé selon l'une des revendications précédentes, **caractérisé en ce que**
une pluralité de différentes fenêtres temporelles (TF) est générée, dans lequel la génération est commandée au moyen d'un procédé d'optimisation numérique de telle manière qu'une valeur de corrélation respective (CC) de la fenêtre temporelle générée (TF) est optimisée.

5. Procédé selon la revendication 4, **caractérisé en ce que** un procédé de descente de gradient, une optimisation par essaim de particules et/ou un procédé d'optimisation génétique est utilisé en tant que procédé d'optimisation.

6. Procédé selon l'une des revendications précédentes, **caractérisé en ce que**
les données d'action de commande (AD) comprennent des composants d'action spécifiant différentes actions de commande, l'évolution des données d'action de commande (AD) dans le temps est enregistrée spécifiquement pour un composant d'action respectif, les valeurs de corrélation (CC) sont déterminées spécifiquement pour un composant d'action respectif, et
en fonction de cela, la fenêtre temporelle résultante (RTF) est déterminée en combinant des fenêtres temporelles spécifiques au composant d'action.

7. Procédé selon l'une des revendications précédentes, **caractérisé en ce que**
les données d'état (SD) comprennent des composants d'état spécifiant différents paramètres d'état du système technique (TS),
en fonction de cela, les valeurs de corrélation (CC) sont déterminées spécifiquement pour une composante d'état respective, et la fenêtre temporelle résultante (RTF) est déterminée en combinant des fenêtres temporelles spécifiques aux composantes d'état.

8. Procédé selon l'une des revendications précédentes, **caractérisé en ce que**
une pluralité d'évolutions dans le temps (ΔAD) dans les données d'action de commande (AD) est enregistrée et est corrélée sur différentes fenêtres temporelles (TF) définies par rapport à l'évolution dans le temps (ΔAD) respective dans les données d'action de commande (AD), chacune avec une pluralité d'évolutions dans le temps (ΔSD) dans les données d'état (SD), dans lequel une valeur de corrélation spécifique à la fenêtre temporelle (CC) est déterminée repectivement.

9. Procédé selon l'une des revendications précédentes, **caractérisé en ce que**
la fenêtre temporelle résultante (RTF) est déterminée par une combinaison, une moyenne et/ou une autre combinaison, notamment pondérée, de différentes fenêtres temporelles (TF).

10. Procédé selon l'une des revendications précédentes, **caractérisé en ce que**
les données d'état (SD) et/ou les données d'action de commande (AD) sont agrégées via une fenêtre temporelle d'agrégation, et la détermination de la fenêtre temporelle résultante (RTF) est basée sur les données d'état agrégées (SD) et/ou les données d'action de commande (AD) agrégées.

11. Procédé selon la revendication 10, **caractérisé en ce que** différentes fenêtres temporelles d'agrégation sont utilisées, les valeurs de corrélation (CC) sont déterminées spécifiquement pour une fenêtre temporelle d'agrégation respective, et
en fonction de cela, une fenêtre temporelle d'agrégation optimisée par rapport aux valeurs de corrélation (CC) est déterminée et utilisée.

12. Procédé selon l'une des revendications précédentes, **Caractérisé en ce que**
des données d'apprentissage (TD) localisées en dehors de la fenêtre temporelle résultante (RTF) sont supprimées ou rejetées lors de l'apprentissage du dispositif de commande (CTL).

13. Dispositif de commande (CTL) pour la commande d'un
système technique (TS) mis en place pour mettre en oeuvre un procédé selon l'une des revendications précédentes.

14. Produit de programme informatique configuré pour exécuter un procédé selon l'une des revendications 1 à 12 sur un ordinateur.

15. Support de stockage lisible par ordinateur avec un produit de programme informatique selon la revendication 14.
